(19) Europäisches Patentamt
European Patent Office
Office européen des brevets

(11) EP 4 147 603 A1

(12) EUROPÄISCHE PATENTANMELDUNG

(43) Veröffentlichungstag:
15.03.2023  Patentblatt 2023/11

(21) Anmeldenummer: 21196658.5

(22) Anmeldetag: 14.09.2021

(51) Internationale Patentklassifikation (IPC):
**A46B 9/04** *(2006.01)*

(52) Gemeinsame Patentklassifikation (CPC):
**A46B 9/04**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Curaden AG**
**6010 Kriens (CH)**

(72) Erfinder: **Zavalloni, Marco**
**5610 Wohlen (CH)**

(74) Vertreter: **Keller Schneider**
**Patent- und Markenanwälte AG**
**Eigerstrasse 2**
**Postfach**
**3000 Bern 14 (CH)**

(54) **BÜRSTE FÜR EINE SCHALLZAHNBÜRSTE MIT LÄNGSACHSENSCHWINGUNG**

(57)    Die Bürste hat einem länglichen Grundkörper, der an einem Fussteil einen Adapter zum rotationsfesten Koppeln an einen Schallzahnbürstenantrieb bildet, um die Bürste um eine Fussteil-Längsachse zu schwingen. An einem Kopfteil ist ein einen Borstenträger gebildet, in welchen eine Vielzahl von Borsten verankert ist. Zwischen Fussteil und Kopfteil ist ein länglicher Halsteil gebildet ist. Der Grundkörper bildet dahingehend einen Knick-Winkel, dass die Fussteil-Längsachse und eine Kopfteil-Ausrichtungsachse einen Winkel $\gamma$ im Bereich von 7° bis 17° einschliessen. Der Borstenträger hat bezogen auf eine Länge L des Grundkörpers eine Auslenkung A im Bereich von 5% bis 15%. Die Vielzahl von Borsten steht im Wesentlichen senkrecht zur Kopfteil-Ausrichtungsachse. Der wesentliche Teil der Borsten hat eine Knickspannung $\sigma_k$ im Bereich von 0.1 bis 10 MPa haben, wobei

$$\sigma_k = \frac{\pi^3}{L^2} \cdot E \cdot r^2$$

$\pi$ = Kreiszahl (= 3.14)
E = E-Modul der Borsten,
r = halber Durchmesser der Borste
L = Länge der Borste (LB)

Fig. 2

EP 4 147 603 A1

**Beschreibung**

**Technisches Gebiet**

Die Erfindung betrifft eine Bürste für eine Schallzahnbürste mit Längsachsenschwingung. Die Bürste hat einen länglichen Grundkörper, der an einem Fussteil einen Adapter zum rotationsfesten Koppeln an einen Schallzahnbürstenantrieb bildet, um die Bürste um eine Fussteil-Längsachse zu schwingen. An einem Kopfteil der Bürste ist ein Borstenträger gebildet, in welchen eine Vielzahl von Borsten verankert ist. Zwischen Fussteil und Kopfteil ist ein Halsteil gebildet. Der Grundkörper bildet dahingehend einen Knick-Winkel, dass die Fussteil-Längsachse und eine Kopfteil-Ausrichtungsachse einen Winkel $\gamma$ im Bereich von 7° bis 17° einschliessen. Der Borstenträger hat bezogen auf eine Länge des Grundkörpers eine Auslenkung A im Bereich von 5% bis 20%. Die Borsten stehen im Wesentlichen senkrecht zur Kopfteil-Ausrichtungsachse stehen.

Weiter betrifft die Erfindung ein Set enthaltend eine Bürste nach einem der vorhergehenden Ansprüche und einem Handapparat mit Schallbürstenantrieb.

**Stand der Technik**

Es gibt unterschiedliche Arten von elektrisch angetriebenen Zahnbürsten.

Aus den Druckschriften DE 10 2016 011477 (Schiffer), EP 2'454'967 A1 (Braun), WO 2005 046508 A1 (Trisa) und anderen ist das Prinzip des runden Bürstenkopfs bekannt, der um eine Achse parallel zu der Borstenrichtung rotieren kann und um diese Achse hin und her bewegt wird. Der Vorteil dieser Anordnung ist, dass der bewegte Teil (nämlich der runde Bürstenkopf) sehr klein ist. Es braucht nicht viel Antriebsenergie und auftretenden Kräfte (Drehmomente) sind tendenziell klein. Der Nachteil dieses Prinzips liegt darin, dass die Borstenbewegung abhängig ist von der Distanz zur Rotationsachse. Je näher die Borsten zur Achse des Bürstenkopfs sind, desto geringer ist die Hin- und Her-Bewegung. Das Bewegungsmuster ist also sehr inhomogen verteilt über das Borstenfeld.

Aus den Druckschriften JP H04-43127 (Kao), US 2006 168744 A1 (Butler), US 2012/0291212 (Montagnino) und anderen ist das Prinzip der Pendelbewegung bekannt. Dabei pendelt die Bürste um eine Pendelachse, die senkrecht zum Handapparat (Antrieb) und zur aufgesetzten Bürste steht und die die Längserstreckungsachse von Handapparat und Bürste am Ort der Kopplung der Bürste an den Handapparat schneidet. Der Vorteil ist, dass die Bewegungsintensität über das ganze Borstenfeld homogen verteilt ist. Alle Borsten haben nämlich mehr oder weniger den gleichen Abstand von der Pendelachse. Der Nachteil besteht allerdings darin, dass relativ grosse Kräfte (Momente) auftreten, weil der Bürstenkopf mit seiner Masse relativ weit von der Pendelachse entfernt ist.

Aus den Druckschriften JP 2012-161368 (Sanion), DE 299 13 406 U1 (Rowenta), US 6,766,548 B1 (Rowenta), WO 2005 046508 A1 (Trisa), WO 2013/104020 A1 (Erskine) und anderen ist das Prinzip der Gehäusevibration bekannt. Ein Antrieb im Handapparat oder im Bürstenhals erzeugt eine nicht näher definierte Vibration, die sich auf die Borsten überträgt. Der Vorteil dieser Konstruktion ist, dass man sich nicht mit den technischen Details der Bewegungsübertragung befassen muss. Der Nachteil ist aber, dass man das ganze Gehäuse vibrieren muss und dass entsprechend mehr Antriebsenergie benötigt wird, als wenn nur ein kleiner Teil in Vibration versetzt werden muss. Zudem darf die Vibration nicht zu stark sein, weil das den Komfort beim Halten des Handapparats beeinträchtigt. Schliesslich sind die effektiven Bewegungen der Borsten nicht bekannt und die Wirkung der Reinigung dieser Art von undefinierter und unkontrollierter Vibration ist alles andere als optimal.

Eine weiteres Prinzip ist aus den Druckschriften WO 2012-151259 A1 (Water Pik), EP 2'548'531 B1 (Trisa) und anderen bekannt. Hier hat der Handapparat einen Kopplungsstift, der sich um die Längsachse hin und her dreht. Die auf den Kopplungsstift aufgesetzte Bürste hat einen geraden Hals und am Ende eine Borstenplatte, von der die Borsten quer zur Längsachse des Handapparats bzw. des Bürstenhalses stehen. Der Vorteil dieser Geometrie besteht darin, dass relativ geringe Kräfte (Momente) auftreten, weil die Masse (Hals, Borstenplatte) der Aufsatzbürste relativ nahe bei der Längsachse (Bewegungszentrum) ist. Auch ist die Bewegungsintensität relativ gleichmässig über das Borstenfeld verteilt.

Der Nachteil dieses Prinzips ist jedoch, dass die Borsten nur eine eindimensionale Bewegung (hin und her) ausführen.

Bei Handzahnbürsten ist bekannt, dass der Reinigungseffekt von der Härte der Borsten abhängt. Borsten unterschiedlicher Härte haben je nach Einsatzzweck unterschiedliche Reinigungswirkung und unterschiedliches Schädigungspotenzial. Diese Effekte sind in Fachkreisen bekannt und fliessen regelmässig auch in die Beratung der Patienten ein.

Die WO 2016/178142 A1 (Braun GmbH) beispielsweise offenbart eine Handzahnbürste mit federnd gelagerten Borsten. Diese ragen in einem schrägen Winkel aus der Trägerplatte heraus und sind dadurch besonders federnd. Dadurch können sie unter Belastung ihre Länge verändern, was den Komfort für das Zahnfleisch erhöht. Als Bereich für die Knickkraft einer Borste werden 0.01 N bis 2 N, beispielsweise 0.4 N angegeben.

Die Bedeutung der Weichheit bzw. Flexibilität der Filamente ist auch für elektrisch angetriebenen Zahnbürsten thematisiert worden.

Die EP 1 713 413 B1 (Church & Dwight) beispielsweise beschreibt mit eine modular aufgebaute elektrische Zahnbürste, bei der der Anwender gewisse Teile des Bürstenkopfs austauschen kann. Der Bürstenkopf besteht aus einem stationären und einem in Bürstenlängsrichtung linear verschiebbaren Borstenträger. Als ein Faktor der Reinigungswirksamkeit dieser Konstruktion wird die Borstensteifigkeit erwähnt. Diese wird als eine Funktion von vier Parametern dargestellt: Borstendurchmesser, Borstenlänge, E-Modul, Anzahl Borsten der Bürste. Diese soll im Bereich von 0.2 bis 0.8 sein.

Die Schallzahnbürsten sind für den Benutzer sehr bequem und gelten auch als effizient, weil die elektrisch angetriebene Bürste die Bewegungen sehr viel schneller macht, als man es von Hand tun kann.

Bei den Schallzahnbürsten hat man sich bisher darauf gestützt, dass die Reinigung umso besser ist, je höher die Frequenz des Motors ist und je grösser die Reinigungsbewegung der Borsten ist.

Aus der WO 2017/050612 A1 (Curaden) ist eine Schallzahnbürste bekannt, die einen abgewinkelten Bürstenkopf hat. Dadurch dass die Schallzahnbürste nach vorn gewinkelt ist, sind die verschiedenen Stellen des Gebisses besser zugänglich. Zudem wird mit dem Knick erreicht, dass die Filamente der Bürsten mit grösserer Amplitude quer zur Bürstenlängsachse schwingen. Die bevorzugte Betriebsfrequenz ist bei 2000 bis 8000 Hertz. Die Frequenzen können aber auch höher zum Beispiel bei 10 kHz, 50kHz oder auch tiefer, zum Beispiel bei 200 Hz oder 500 Hz liegen.

Aus der US 2012/0291212 A1 ist eine Ultraschall-Zahnbürste bekannt, die zur Erhöhung der Resonanzfrequenz zwei parallele, quer zur Längsachse der Bürste verlaufende Kanäle hat. Die Frequenz wird in Vorwärts-Rückwärtsrichtung erhöht, wenn die beiden Kanäle an der Vorderseite platziert sind. Sind die Kanäle links und rechts am Bürstenhals vorgesehen, erhöht sich die Frequenz in seitlicher Richtung.

Nachteile:

Es fehlt nach wie vor an einem ausreichenden Verständnis des Reinigungsverhaltens von Schallzahnbürsten. Die Erkenntnisse, die man heute in Bezug auf die Reinigungswirkung von Handzahnbürsten hat, lassen sich nicht auf die hochdynamische Situation einer Schallzahnbürste übertragen. In der EP 1'713'413 (Church & Dwight) wird darauf hingewiesen, dass die Borstensteiffigkeit von 0.2 - 0.8 vorteilhaft ist für die Wirksamkeit der Reinigung. Die EP 3'291'700 (Braun) beschreibt eine Knickkraft im Bereich von 0.01 N bis 2 N als vorteilhaft.

**Darstellung der Erfindung**

Aufgabe der Erfindung ist es, eine dem eingangs genannten technischen Gebiet zugehörende Zahnbürste für Schallzahnbürsten zu schaffen, welche eine bessere, insbesondere für das Zahnfleisch schonende Reinigungswirkung hat. Insbesondere soll eine definierte und kontrollierte zweidimensionale Bewegung der Borsten erzeugt werden.

Die Lösung der Aufgabe ist durch die Merkmale des Anspruchs 1 definiert. Gemäss der Erfindung hat der wesentliche Teil der Borsten eine Knickspannung $\sigma_k$ in einem Bereich von 0.1 MPa bis 10 MPa, wobei

$$\sigma_k = \frac{\pi^3}{L^2} \cdot E \cdot r^2$$

$\pi$ = Kreiszahl (= 3.14)

E = E-Modul der Borsten,

r = halber Durchmesser der Borste

L = Länge der Borste

Es wurde gefunden, dass die angestrebte zweidimensionale Bewegung der Borstenspitzen ein Kombinationseffekt der erfindungsgemässen Geometrie der Bürste und der angegebenen Knickspannung der Borsten ist. Insbesondere kann die zweidimensionale Bewegung als eine Art "8"-Bewegung bezeichnet werden, weil die Borstenspitzen eine Art "8" zeichnen. Die "8" ist dabei in einer y-Richtung erheblich grösser als in der dazu senkrecht stehenden x-Richtung. Die genaue Geometrie der "8"-Bewegung kann über verschiedenen Faktoren gesteuert werden.

Die Erfindung geht im Übrigen von folgenden Grundmerkmalen aus:

a) Die Bürste hat ein Fussteil, an welchem ein Adapter zum Handapparat, ein sogenannter Antriebsadapter, ausgebildet ist. Der Adapter ist in geometrischer Hinsicht darauf ausgelegt, mit einem Kopplungsteil (z.B. Stift) des Schallzahnbürstenantriebs drehfest (aber auswechselbar) verbunden zu werden. Der Schallzahnbürstenantrieb erzeugt eine Längsachsenschwingung, die auf die Bürste zu übertragen ist. Der Antriebsadapter definiert eine geometrische Fussteil-Längsachse (x) der Bürste. Diese Längsachse ist im Normalfall die Richtung, in welcher man die Bürste auf den Handapparat aufstecken kann. Um diese Längsachse wird die Bürste hin und her gedreht.

b) Weiter hat die Bürste einen Kopfteil mit einem Borstenträger, in welchen eine Vielzahl von Borsten verankert ist (Borstenfeld). Der Kopfteil ist im Prinzip das obere Ende der Bürste (wohingegen der Fussteil das untere Ende bildet). Der Kopfteil definiert eine Kopfteil-Ausrichtungsachse. Die im Kopf verankerten Borsten ragen z.B. quer zur Kopfteil-Ausrichtungsachse weg. Typischerweise, aber nicht zwingend, stehen die Borsten senkrecht zur Kopfteil-Ausrichtungsachse.

c) Zwischen Fussteil und Kopfteil hat der Grundkörper ein Halsteil. Der Halsteil verbindet also Fussteil und Kopfteil miteinander. Die Ausgestaltung des Halsteils kann anz unterschiedlich sein.

Bei einer besonderen Ausführungsart ist der Halsteil im Vergleich zum Fussteil querschnittsverjüngt. Das heisst, wenn man den Fussteil im Querschnitt (bezogen auf die Fussteil-Längsachse) betrachtet, dann sind die Abmessungen in x- oder y-Richtung kleiner als beim Querschnitt des Halsteils (also quer zur Halsteil-Längsachse). Dabei ist querschnittsverjüngt auf die Querschnittsfläche zu beziehen. Es ist also nicht zwingend, dass die Abmessungen in x-Richtung und y-Richtung geringer sind.

Damit die Borstenspitzen die erfindungsgemässe "8"-Bewegung machen, muss der Grundkörper der Bürste erfindungsgemäss ausgeführt sein. Dabei spielen der Knickwinkel γ und die Auslenkung eine Rolle. Der Knickwinkel sorgt dafür dass die Borsten, wenn sie senkrecht zur Kopfteil-Ausrichtungsachse stehen, nicht senkrecht zur Fussteil-Längsachse und folglich nicht senkrecht zur Achse der Längsachsenschwingung stehen. Vielmehr bilden sie einen Winkel im Bereich von 83° bis 73° (= 90° - 7° bzw. = 90°-17°). Der Knickwinkel muss eine gewisse Grösse haben, damit die erfindungsgemässe "8"-Bewegung in ausreichendem Mass entstehen kann. Ist der Knickwinkel zu gross fällt die "8"-Bewegung wieder zusammen, bzw. sie wird durch unerwünschte dynamische Einflüsse degeneriert.

Ebenfalls spielt die Auslenkung des Bürstenkopfs eine Rolle für das Entstehen der "8"-Bewegung. Im Rahmen der Erfindung ist die Auslenkung im Bereich von 5% bis 20%. Ist die Auslenkung unterhalb des erfindungsgemässen Bereichs, vermag die Bewegung des Kopfteils nicht die hinreichende Anregung an den verankerten Teil der Borsten zu geben. Ist die Auslenkung zu gross, können in Kombination des Knickwinkels Schwingungen im Grundkörper entstehen, die der Anregung der erfindungsgemässen "8" Bewegung zuwider laufen.

Gemäss einer besonderen Ausführungsform beträgt die Knickspannung höchstens 4 MPa, insbesondere höchstens 1 MPa. Die Knickspannung ist nämlich einer der Parameter, der auf die Form der "8"-Bewegung einen besonderen Einfluss hat. Ist die Knickspannung deutlich unter der erfindungsgemässen Obergrenze (also im Sinn der vorliegenden Ausführungsform) kann die x-Komponente der "8"-Bewegung deutlich grösser werden. Bei einer Knickspannung 1 MPa oder weniger, sind die Borsten relativ flexibel und können auch bei Bürsten mit kleinem Knickwinkel und/oder einer geringen Auslenkung die erfindungsgemässe "8" Bewegung noch gut ausführen.

Gemäss einer weiteren besonderen Ausführungsform der Erfindung beträgt die Knickspannung mindestens 1 MPa. Damit kann erreicht werden, dass die "8"-Bewegung in x-Richtung kleiner wird. Ein anderer Effekt, der mit dieser Untergrenze erreicht werden kann, ist es, dass die Auslenkung vergrössert werden kann, ohne dass die "8"-Bewegung instabil wird. Ist nämlich die Auslenkung relativ gross, kann das dazu führen, dass die Borstenspitzen nicht mehr eine kontrollierte "8"-Bewegung ausführen, sondern nur noch "chaotisch peitschen".

Im Sinn einer besonderen Ausführungsart liegt die Knickspannung im Bereich von 1 MPa bis 4 MPa. Dies hat den Vorteil, dass die Bürste für höhere Betriebsfrequenzen von insbesondere 250 Hz und mehr geeignet ist. Meist können bei Schallzahnbürsten unterschiedliche Betriebsfrequenzen eingestellt werden. Die Betriebsfrequenz gehört zu den Parametern, die einen Einfluss auf die Bewegung der Borstenspitzen hat und damit auf die "8"-Bewegung. Es ist deshalb darauf zu achten, dass die Bürste vor allem dann die optimierte "8"-Bewegung ausführt, wenn die im Einzelfall empfohlene oder bevorzugte Betriebsfrequenz zur Bürste und der Knickspannung der Borsten passt.

Gemäss einer weiteren besonderen Ausführungsart liegt der E-Modul des Materials der Borsten im Bereich von 1000 MPa bis 3500 MPa. Damit ist es möglich, mit Materialien wie z.B. Polybutylenterephtalat (PBT) mit 10% Glasfasern arbeiten. Bei Materialien mit einem E-Modul in diesem Bereich kann die Borstenlänge kürzer gewählt werden, ohne dass die Knickspannung erheblich abnimmt.

Insbesondere kann es von Vorteil sein, dass der E-Modul nicht mehr als 2000 MPa beträgt. Solche Materialien finden sich ebenfalls bei den PBT mit niedrigem Glasfaseranteil.

Es kann aber auch Vorteile haben, Materialien mit einen E-Modul im Bereich von 2500 MPa bis 3500 MPa einzusetzen. Dadurch kann der Borstendurchmesser reduziert werden, was feinere Borstenspitzen ermöglicht.

Die Erfindung erstreckt sich auch auf besondere Ausführungsformen, die einen E-Modul von 4000 MPa und mehr haben. Dieser Bereich kann dann Vorteile haben, wenn die Borsten nicht in dichtgepackten Büscheln stehen oder wenn die gegenseitige Reibung der Borsten eher gering ist. Ein weiterer Vorteil kann darin liegen, dass die Borsten länger sein können, ohne dass die "8"-Bewegung verloren geht. Solche Borsten lassen sich z.B. mit Polybutylene Terephthalat (PBT) mit Carbon Black Anteil herstellen."

Gemäss einer besonderen Ausführungsart ist die mittlere Länge der Borsten im Bereich von nicht mehr als 10 mm. Sind die Borsten zu lang, ist kann die Bürste unhandlich werden.

Gemäss einer weiteren besonderen Ausführungsart beträgt die mittlere Lände der Borsten mindestens 5 mm. Damit lässt sich sicherstellen, dass der Querschnitt der Bortsten zu fein ist, was bei der Herstellung der Bürste von Vorteil ist.

Typischerweise sind die Borsten der Bürste zu Büscheln zusammengefasst. Haben die Borsten im Büschel unterschiedliche Länge (z.B. wenn der Buschel am Ende abgerundet oder zugespitzt ist, dann wird im Rahmen der Erfindung der Mittelwert der Borstenlänge im Büschel als massgebliche Borstenlänge verwendet. Wenn eine Bürste unterschiedliche lange Büschel hat, dann haben die verschiedenen Büschel in der Regel auch eine unterschiedliche Funktion. Besonders relevant ist die erfindungsgemässe Knickspannung für Borsten bzw. Büschel, die den Randbereich des Zahns putzen resp. die am Übergang zum Zahnfleische wirksam sind.

Gemäss einer besonderen Ausführungsform liegt die Auslenkung im Bereich von 5% bis 15%, insbesondere im Bereich von 7% bis 13*. Die Auslenkung gehört zu den Einflussfaktoren auf die geometrische Form der "8"-Bewegung. Tendenziell verstärkt eine grosse Auslenkung die "8 Bewegung" und eine kleine reduziert sie. Allerdings ist dabei auch der Knickwinkel zu beachten. Weil die "8"-Bewegung auf einem dynamischen Effekt beruht, der sich aus der Kombination der verschiedenen Parameter (Geometrie der Bürste, Bemessung und E-Modul der Borsten etc.) im Betrieb ergibt, hängt er auch davon ab, mit welcher Schwingungsfrequenz die Bürste betrieben wird. Die besonderen Ausführungsformen der Erfindung sind dafür ausgelegt, dass Bürsten dann die "8 Bewegung" zeigen, wenn sie mit einer Frequenz im Bereich von 100 Hz bis 400 Hz betrieben werden, d.h. wenn sie mit einem Antrieb in diesem Bereich kombiniert sind.

Vorzugsweise liegt die Auslenkung im Bereich von 5 bis 10 mm.

Eine weitere besondere Ausführungsart besteht darin, dass die Borsten einen Durch¬messer von nicht mehr als 0.12 mm haben, insbesondere von nicht mehr als 0.1 mm. Wenn von einer bestimmten, im Einzelfall gewünschten Anzahl Borsten pro Büschel ausgegangen wird, kann mit dünnen Borsten ein dünneres Büschel erstellt werden. Der Bereich der dünneren Borsten kann mit einem Bereich von geringerer Borstenlänge kombiniert werden.

Im Normalfall sind die Borsten im Querschnitt rund. Wenn sie einen unrunden Querschnitt aufweisen, wird ein Mittelwert zwischen maximaler und minimaler Querabmessung als Durchmesser im Sinn der Erfindung betrachtet.

Gemäss einer besonderen Ausführungsart der Erfindung, liegt der Winkel □ im oberen Bereich, also im Bereich von 12° bis 17°. Dies ist für Bürsten von Vorteil, bei denen der Abstand der geometrischen Knickposition von der Adapter-Ebene mindesten 50% der Länge der Bürste beträgt. (Die geometrische Knickposition ergibt sich aus dem Schnittpunkt der Fussteil-Längsachse und der Kopfteil-Ausrichtungsachse.) Der Winkelbereich kann auch bei Bürsten mit nur einem einzigen Borstenbüschel von Vorteil sein.

Grosse Knickwinkel scheinen die "8"-Bewegung der Borstenspitzen in x-Richtung zu verstärken. Das heisst die Augen der "8"-Bewegung werden quasi grösser.

Eine andere besondere Ausführungsart der Erfindung liegt darin, dass der Knickwinkel □ im Bereich von 7° bis 12° liegt. Dies ist für Bürsten von Vorteil, bei denen der Bürstenkopf plattenförmig ist und eine Vielzahl von Borstenbüscheln hat. Zusätzlich kann bei diesen Ausführungsarten der Halsteil gegenüber dem Kopfteil querschnittsverjüngt sein.

Gemäss einer bevorzugten Ausführungsform sind die Borsten der Bürste in Form von mehreren Büscheln angeordnet, die von einander distanziert sind. Die Büschel können z.B. so angeordnet sein, dass ein inneres Borstenfeld und ein äusseres Borstenfeld definiert ist. Das innere Borstenfeld ist vom äusseren Borstenfeld umgeben. Die Borsten im inneren Borstenfeld können eine andere Länge als die Borsten im äusseren Borstenfeld haben. Im Rahmen der Erfindung ist es dabei möglich, dass nur die Borsten im äusseren Borstenfeld die definierte Knickspannung haben.

Es entspricht aber auch allgemein einer besonderen Ausführungsart, dass am Bürstenkopf mindestens zwei unterschiedliche Borstenlängen vorgesehen sind. Dabei ist es aber von Vorteil, wenn unterschiedlich lange Borsten zu unterschiedlichen Borstenbüscheln gehören. Anders ausgedrückt sind die Borstenlängen innerhalb eines Borstenbüschels vorzugsweise im Wesentlichen gleich gross.

Gemäss einer bevorzugten Ausführungsform der Erfindung hat der Adapter zum rotationsfesten Koppeln an den Schallzahnbürstenantrieb einen parallel zu der Fussteil-Längsachse verlaufenden Kanal für eine formschlüssige Aufnahme eines Stifts des Schallzahnbürstenantriebs. Die Bürste kann also mit dem Adapter auf einen Stift eines Schallzahnbürstenantriebs gesteckt werden. Vorzugsweise ist dabei ein Verrastungselement vorgesehen, so dass die Bürste auf den Schallzahnbürstenantrieb einrastet. Der Stift wird um seine Längsachse hin und her geschwenkt und die Bürste übernimmt als ganze diese Längsachsenschwingbewegung.

Bei einer bevorzugten Ausführungsform der Erfindung weist der Grundkörper ein tragendes Material mit einem E-Modul von nicht mehr als 6000 MPa und nicht weniger als 2000 MPa auf. Der Borstenträger ist mit dem Fussteil, insbesondere dem Adapter einstückig gebildet. Im Rahmen der Erfindung kann der einstückige Grundkörper auch aus mehreren stoffschlüssig verbundenen Elementen (Fussteil, Halsteil, Kopfteil) gebildet sein. Der Hauptteil der Bürste kann z.B. ein Kunststoff-Spritzgussteil sein. An diesem Spritzgussteil sind dann Borstenträger, Bürstenhals und Fussteil ausgebildet. Nach Bedarf kann eine lokale oder totale Ummantelung mit einem weichen Kunststoffmantel vorhanden sein.

Die Erfindung bezieht sich auch auf ein Set aus einer Bürste der erfindungsgemässen Art und einem Schallbürstenantrieb. Der Schallbürstenantrieb hat die Form eines Handapparats, auf den die Bürste aufgesteckt werden kann. Der Schallbürstenantrieb ist dazu ausgebildet, dass er die Bürste um die Fussteil-Längsachse hin und her schwingt. Die Betriebsfrequenz soll im Bereich von 150 - 400 Hz, insbesondere im Bereich von 150 Hz bis 300 Hz sein.

In diesem Bereich können die erfindungsgemässen Borsten die angestrebte zweidimensionale "8"-Bewegung am ehesten ausführen.

Eine besondere Ausführungsart des Sets aus Bürste und Schallbürstenantrieb zeichnet sich dadurch aus, dass der Schallbürstenantrieb eine Schwingung mit einer Winkelamplitude von max. 3° (bezogen auf eine Mittelstellung) erzeugt. Es hat sich gezeigt, dass nur sehr kleine Winkelamplituden erforderlich sind. Die Amplitude in der "8"-Bewegung der Borsten wird grösser ausfallen, nicht zuletzt weil die Konstruktion der Bürste und die erfindungsgemässe Knickspannung der Borsten dies in Kombination miteinander bewirken.

Der Adapter des Fussteils hat z.B. einen Kanal und der Schallbürstenantrieb einen Stift, der in den Kanazl formschlüssig einfügbar ist, um eine bezüglich der Fussteil-Längsachse verdrehsichere Verbindung zu schaffen, so dass die Bürste als Ganzes um die Fussteil-Längsachse (Längsachse des Stifts) schwingend angetrieben werden kann.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1    eine schematische Darstellung einer Draufsicht auf eine Bürste;

Fig. 2    eine schematische Darstellung einer Seitenansicht der Bürste;

Fig. 3    eine schematische Darstellung einer Rückenansicht der Bürste;

Fig. 4    eine schematische Darstellung einer Draufsicht auf eine Schallzahnbürste umfassend die Bürste;

Fig. 5a, b    eine schematische Seitenansicht und einer Draufsicht einer Schallzahnbürste;

Fig. 6    eine schematische Darstellung einer Seitenansicht einer Schallzahnbürste mit genau einem Büschel;

Fig. 7    eine schematische Darstellung der erfindungsgemässen "8"-Bewegung;

Fig. 8    eine schematische Darstellung der Winkelamplitude der Längsachsen-Schwingung;

Fig. 9    eine Ausführungsform mit einem ovalen Bürstenkopf;

Fig. 10    eine Ausführungsform einer Einbüschelbürste mit rückseitigem Borstenfeld;

Fig. 11    eine Ausführungsform einer Einbüschelbürste mit vorderseitigem Borsten-feld.

Grundsätzlich sind in den Figuren gleiche Teile mit gleichen Bezugszeichen versehen.

**Wege zur Ausführung der Erfindung**

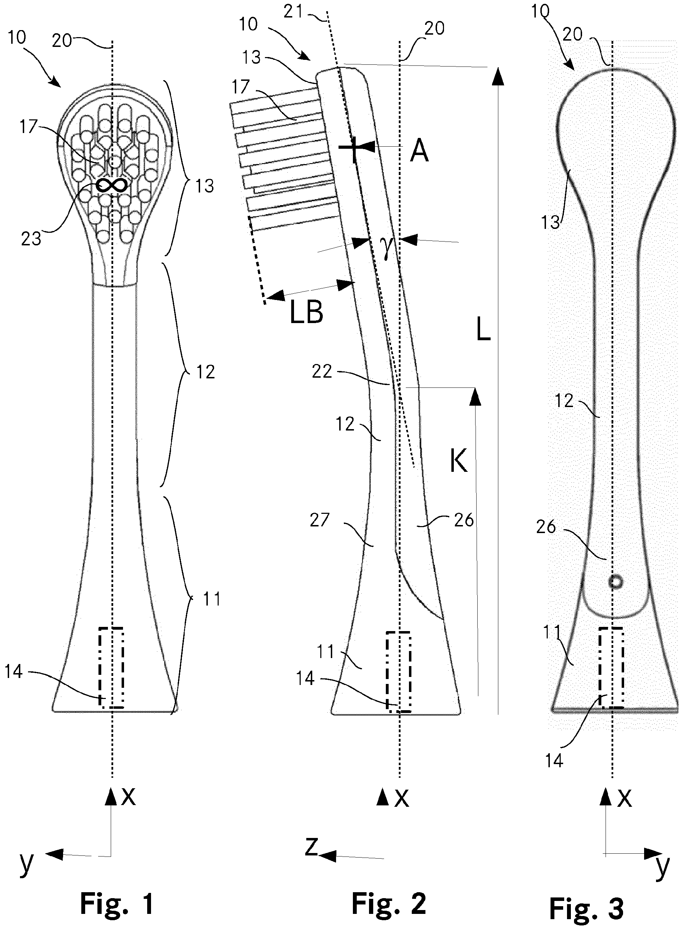

Die Figur 1 zeigt eine schematische Darstellung einer Draufsicht auf eine Bürste 10. Die Bürste 10 umfasst einen kegelstumpfförmigen Fussteil 11, einen stangenförmigen Halsteil 12, der sich dem kegelstumpfförmigen Fussteil 11 anschliesst, und schliesslich einen plattenförmigen Kopfteil 13, welcher sich an den Halsteil 12 anschliesst. Die drei Teile bilden den tragenden Grundkörper der Bürste.

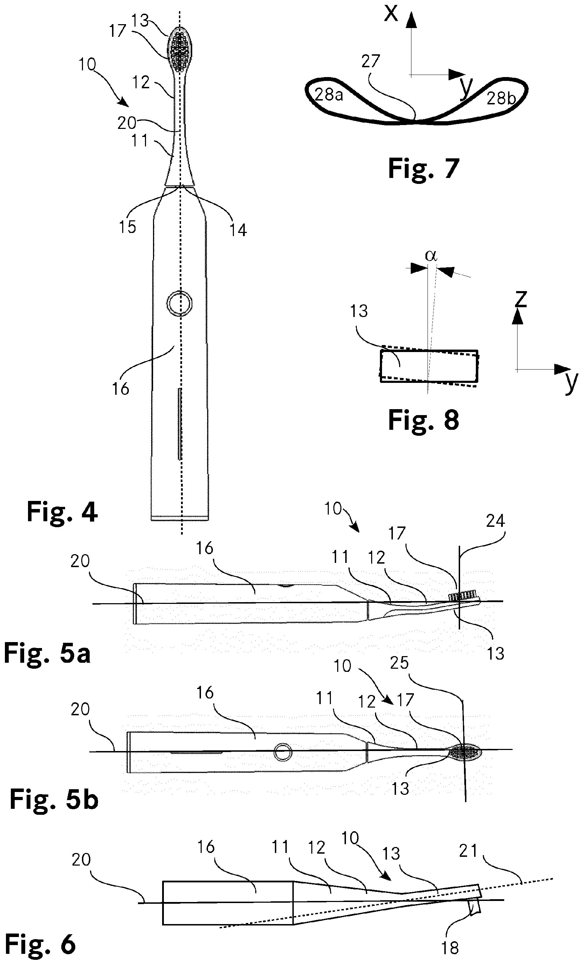

Der kegelstumpfförmige Fussteil 11 umfasst einen Antriebsadapter. Dieser ist vorliegend im Wesentlichen durch eine kanalförmige Aufnahme 14 gebildet, in welche ein Stift des Handapparates der Schallzahnbürste einführbar und verrastbar ist (siehe unten zu Figur 4). Die Bürste 10 weist eine Fussteil-Längsachse 20 auf, welche koaxial zur Aufnahme 14 respektive im Betrieb der Schallzahnbürste koaxial zum Stift ausgerichtet ist. Diese Längsachse definiert die x-Achse des vorliegend benutzten x-y-z-Koordinatensystems. Mit anderen Worten: Der Antriebsadapter definiert die geometrische Fussteil-Längsachse (x) der Bürste.

In der Figur 1 ist weiter das Borstenfeld 17 des Kopfteils 13 ersichtlich, welches vorliegend mehrere (z.B. 20 - 40) Büschel mit jeweils einer Vielzahl (z.B. 100 - 200) an Borsten aufweist.

Gemäss einer bevorzugten Ausführungsform ist der Kopfteil 13 in der Frontansicht tropfenförmig. Das heisst, seine Form erweitert sich - beginnend beim Übergang zum Halsteil - sukzessive bis fast zum oberen Ende des Kopfteils und endet dort in einer rundlichen Endkontur. Bei dieser Form ist (bei gegebener Länge des Borstenfeldes in x-Richtung) der Schwerpunkt des Kopfteils 13 näher beim Ende der Bürste. Dies kann den exzentrischen Effekt bei der vorgegebenen Betriebsfrequenz und damit auch die "8"-Bewegung verstärken.

Die Hauptfläche des plattenförmigen Kopfteils 13 erstreckt sich im Wesentlichen quer x-Achse in y-Richtung.

Auf dem Borstenfeld 17 ist weiter mit dem Bezugzeichen 23 eine in y-Richtung liegende "8" dargestellt. Die "8" illustriert die Bewegung, welche aufgrund der gewählten Materialeigenschaft (E-Modul), des Winkels zwischen der geometrischen Fussteil-Längsachse 20 und der geometrischen Kopfteil-Ausrichtungsachse (siehe weiter unten) und der Knickposition im Betrieb in der Ebene ausgeführt wird.

Zusätzlich zu der "8" führt die Bürste auch noch eine kleine Nickbewegung mit dem Kopfteil 13 aus - diese Bewegung ist im Wesentlichen rechtwinklig zur "8" gerichtet, also im Wesentlichen in z-Richtung. Im Sinn einer bevorzugten Ausführungsform werden die Borsten somit in drei Dimensionen (x, y, z) bewegt.

Die Figur 2 zeigt eine schematische Darstellung einer Seitenansicht der Bürste 10. In dieser Figur ist neben der geometrischen Fussteil-Längsachse 20 auch die geometrische Kopfteil-Ausrichtungsachse 21 ersichtlich. In der Darstellung gemäss Figur 1 sind die Fussteil-Längsachse 20 und die Kopfteil-Ausrichtungsachse 21 hintereinander. Die Kopfteil-Ausrichtungsachse 21 ist im Wesentlichen die Längsachse des Kopfteils. Die beiden Achsen schneiden sich in der geometrischen Knickposition 22. In der vorliegenden Ausführungsform schliessen die geometrische Fussteil-Längsachse 20 und die geometrische Kopfteil-Ausrichtungsachse 21 einen Winkel γ (gamma) von 10° ein. Die geometrische Knickposition 22 weist vorliegend einen Abstand K zu der Endfläche des Fussteils 11 von 50% der Gesamtlänge L der Bürste 10 auf. In dieser Kombination des Winkels zur Knickposition 22 wird eine Bürste 10 geschaffen, mit welcher eine besonders effektive und zahnfleischschonende Reinigung der Zähne möglich ist.

Wie aus der Kombination der Figuren 1 und 2 ersichtlich ist, ist in der vorliegenden Ausführungsform der Kopfteil 13 plattenförmig und der Halsteil 12 stangenförmig. In der Projektion des Grundkörpers auf die x-z-Ebene haben der Kopfteil 13 und der Halsteil 12 die gleiche Querabmessung (also die gleiche Dicke). In der Projektion auf die x-y-Ebene (Frontansicht gemäss Figur 1) ist der Kopfteil 13 rund dreimal so breit (y-Richtung) wie der Halsteil 12. Die Länge (x-Richtung) des Kopfteils ist etwa ein Drittel grösser als die Breite (y-Richtung). Der Halsteil 11 ist z.B. ein Drittel so breit und 1,5 mal so lang wie der Kopfteil 13.

Der Halsteil 12 ist gegenüber dem Kopfteil 13 und dem Fussteil 11 verjüngt. Im vorliegenden Beispiel ist der Halsteil 12 in zumindest einer der Seitenansichten (hier in z-Richtung gemäss Figur 1 betrachtet) weniger breit als der Kopfteil 13.

Der Grundkörper der Bürste 10 hat im vorliegenden Beispiel als tragendes Material ein glasfaserverstärktes Polypropylen Borealis GB311U mit einem E-Modul von rund 3500 MPA (Tensile Strength at yield = 97 MPa; Elongation at Yield = 2.8%; E-Modul = Tensile Strength at Yield / Elongation at Yield).

Die Auslenkung ist durch das Verhältnis von Abstand A zu Länge L der Bürste bestimmt. Der Abstand A entspricht dem Abstand des frontseitigen Zentrums des Kopfteils (was hier dem Zentrum des Borstenfeldes 17 entspricht) zur Fussteil-Längsachse 20 (siehe Figur 2). Im vorliegenden Beispiel beträgt die Auslenkung 14%.

Die Borsten sind hier in mehreren Büscheln angeordnet und ragen senkrecht von der Hauptfläche des plattenförmigen Kopfteils weg. Im vorliegenden Fall stehen sie senkrecht zur y-Richtung und verlaufen in der x-z-Ebene. Bei der vorliegenden Ausführungsform sind die Borsten an der Vorderseite des Kopfteils (bzw. der Vorderseite 27 der Bürste) angebracht, das heisst, sie zeigen leicht nach unten zur Adapterfläche (y-z Ebene) des Fussteils. Die Borstenlängsachse schliesst mit der Fussteil-Längsachse einen Winkel ein, der kleiner als 90° ist: nämlich 90° minus Knickwinkel γ.

Die Figur 3 zeigt eine schematische Darstellung einer Rückenansicht der Bürste 10 gemäss den Figuren 1 und 2. Wie aus den Figuren erkennbar ist, hat der Grundkörper auf der Rückseite 26 ein anderes Material, welches weich ist und einen Schutz (Schutzschicht, Schutzmantel) beim Kontakt der Bürstenrückseite mit den Zähnen bietet. Dieses Material ist nicht-tragend und kann daher einen E-Modul ausserhalb des erfindungsgemässen E-Modul-Bereichs von 2000 - 6000 MPa haben. Das tragende Material ist auf der Vorderseite 27 ersichtlich und es macht einen wesentlichen Teil des Querschnitts des Grundkörpers aus.

Die Figur 4 zeigt eine schematische Darstellung einer Draufsicht (z-Richtung) auf eine Schallzahnbürste umfassend die Bürste 10 und einen Handapparat 16 mit einem Stift 15. Die Bürste 10 ist auf den Stift 15 aufgesteckt, so dass die Bürste lösbar, rotationsfest und axial fixiert ist. Der Handapparat 16 dreht den Stift 15 hin und her mit einer Frequenz von z.B. 180 - 270Hz mit einer Amplitude von z.B. 2° (bezogen auf eine Ruhelage) um die Längsachse des Stifts 15 (welche der Längsachse des Handapparats 16 entspricht). Die Bürste dreht sich also hin und her um die Fussteil-Längsachse 20 (x-Achse).

Die Figur 5a zeigt eine schematische Darstellung einer Seitenansicht einer Schallzahnbürste 10. Die Schallzahnbürste 10 umfasst einen Handapparat 16 und eine Bürste 10. Der Antrieb des Handapparats 16 ist als piezoelektrischer Antrieb (nicht dargestellt) ausgebildet, welcher eine Schwingung der Bürste 10 um die x-Achse 20 (Längsachse des Handapparats) erzeugt. Damit führt die Bürste 10 im Betrieb relativ zum Handgriff eine Rotationsschwingung um die x-Achse 20 aus. Aufgrund der erfindungsgemässen Auslenkung des Kopfteils 13 entsteht eine Unwucht, die eine Bewegungskomponente in der Y-Richtung 24 und/oder in die Z-Richtung 25 (siehe unten, Figur 5b) unterstützt. Dieser Effekt wird durch den geeignet gewinkelten Knick im Bürstenhals, den geeignet gewählten E-Modul gesteuert und kann durch weitere geometrische Gestaltungsmerkmale der Bürste (wie Knickwinkelposition, Auslenkung, Massenverteilung und andere Merkmale gemäss den besonderen Ausführungsarten der Erfindung) eingestellt werden).

Die Figur 5b zeigt eine schematische Draufsicht auf ein Körperpflegegerät gemäss Figur 5a. In dieser Darstellung ist die Z-Richtung 25 ersichtlich. Sie verläuft im Wesentlichen in Richtung der Borsten. Wie aus der Figur erkennbar ist, ist der Handapparat deutlich grösser als die Bürste. Nur so kann er eine Längsachsenschwingung erzeugen (anstelle einer undefinierten bzw. ungerichteten Vibrationsbewegung, wie sie bei bekannten Schallzahnbürsten vorhanden ist.

Die Figur 6 zeigt eine Ausführungsform der Schallzahnbürste, welche genau einen Büschel 18 umfasst. Der Büschel 18 ist bezüglich des Kopfteils 13 rückseitig angeordnet. Der Kopfteil ist quasi nach hinten geneigt.

Die Figur 7 zeigt eine schematische Darstellung der erfindungsgemässen "8"-Bewegung. Die "8"-Bewegung weist vorliegend die Form einen einseitig abgeflachten "8" auf, wobei durch Zentrum 27 der "8" eine Symmetrieachse (X-Achse) verläuft. Die beiden Schlaufen 28a, 28b der "8" erstrecken sich in y-Richtung. Die Erfindung beschränkt sich jedoch nicht auf exakt diese Form der "8"-Bewegung, die exakte Form der Bewegung hängt schliesslich von den Parametern des Bürstenkopfs sowie der vom Motor des Handapparats erzeugten Schwingung ab.

Die Figur 8 veranschaulicht die Amplitude der Längsachsen-Schwingungsbewegung. Die x-Achse steht senkrecht zur Zeichenebene. Der plattenförmige Kopfteil 13 (ohne Borsten dargestellt) schwenkt um den Winkal $\alpha$ (alpha) um die x-Achse. (Die Borsten erstrecken sich in Figur 8 in z-Richtung nach oben). Die Hauptkomponente der Schwenkbewegung (und damit die Borsten-Wischbewegung) ist in y-Richtung. Der Winkel $\alpha$ (alpha) zwischen der Ruhelage (ausgeschaltetem Antrieb) und der maximalen Auslenkung von der Ruhelage beträgt vorzugsweise maximal 3°, vorzugsweise 2°. Die Auslenkung von "maximal links" zu "maximal rechts" beträgt also 6° bzw. 4°.

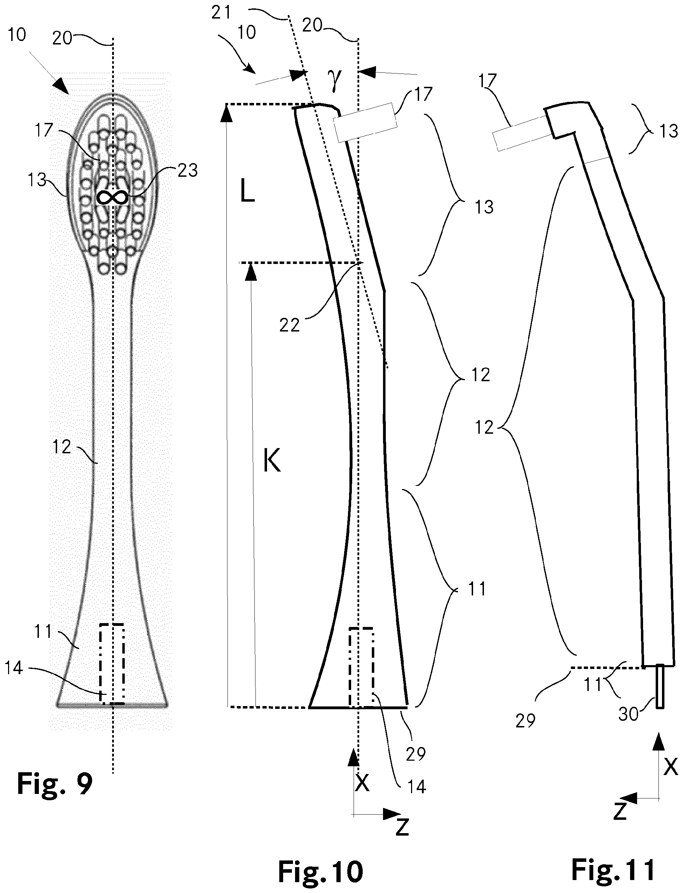

Die Figur 9 zeigt eine Bürste 10 mit einem plattenförmigen ovalen Kopfteil 13. Die Längsachse der ovalen Form verläuft im Wesentlichen in x-Richtung und die Querachse in y-Richtung. Das Zentrum des Kopfteils 13 ist hier weiter weg vom oberen Ende der Bürste 10 als bei dem tropfenförmigen Kopfteil gemäss Figur 1.

Figur 10 zeigt eine Bürste mit einem Knickwinkel $\gamma$ (gamma) von 14° und einer Abstand K der geometrischen Knickposition 22 zu der Endfläche 29 des Fussteils 11 von 75% bezogen auf die Länge L der Bürste.

Der Fussteil 11 verjüngt sich von der Endfläche 29 ausgehend bis zum Übergang in den Halsteil 12. Der Fussteil 11 kann z.B. kegelstumpfförmig oder pyramidenstumpfförmig sein, wobei er im Längsschnitt ein z.B. konkaves Profil hat. Damit ist der Schwerpunkt des Fussteils 11 näher bei der Endfläche 29 als bei einem vergleichbaren Fussteil mit geraden Profillinien.

Der Halsteil 12 nimmt bei der dargestellten Ausführungsart etwa die halbe Länge (L) der Bürste ein. Wie die Figur 10 veranschaulicht, muss der Halsteil 12 nicht zwingend einen konstanten Querschnitt auf seiner gesamten Länge haben. Er kann durchaus eine sich verändernde Kontur haben.

Der Kopfteil 13 wird durch die Verlängerung des Halsteils 12 gebildet. Im vorliegenden Beispiel hat der Kopfteil 13 im Wesentlichen dieselben Querabmessungen (in einem Schnitt senkrecht zur Kopfteil-Ausrichtungsachse 21 betrachtet) wie der Halsteil 12. Das Borstenfeld 17 ist seitlich am Kopfteil 13 platziert. Die Borsten stehen also senkrecht zur Kopfteil-Ausrichtungsachse 21 ab.

Figur 11 zeigt eine Ausführungsform, bei der der Fussteil 11 im Wesentlichen durch einen Stift 30 als Antriebsadapter gebildet ist. Der Halsteil 12 ist stangenförmig und nimmt z.B. 90% der Bürstenlänge ein. Der Kopfteil 13 ist der Teil, in dem das Borstenfeld 17, hier in Form eines einzigen Büschels, verankert ist. Der Stift 30 wird in x-Richtung in den Handapparat gesteckt zum rotationsfesten Koppeln an einen Schallzahnbürstenantrieb mit Längsachsenschwingung, wobei der Antriebsadapter die geometrische Fussteil-Längsachse (x) der Bürste definiert.

Eine Bürste gemäss Fig. 11 ist z.B. aus einem Material mit einem E-Modul von ca. 4600 MPa. Als Beispiel für ein solches Material wird LNP ULTEM® EXCP0096 Polyetherimide, 30% Carbon Fiber Reinforcement, 10% PTFE Lubricant genannt (Tensile Strength at Yeald = 163 MPa, Elongation at Yield = 3.5%, Tensil Strength / Elongantion = 4650 MPa).

In weiteren, nicht dargestellten Ausführungsformen weist die Bürste 10 anstatt des Borstenfelds 17 eine Interdentalbürste zur Reinigung der Zahnzwischenräume auf.

Die Erfindung wird nun anhand konkreter Beispiele von geeigneten Parametern erläutert. Dabei wird die Länge LB der Borsten von ihrem Austritt aus der Frontseite des Kopfteils bis zu ihrer Spitze gemessen wie in Fig. 2 gezeigt. Bei den Beispielen 1 bis 6 sind die Borsten in mehreren voneinander leicht distanzierten Büscheln angeordnet.

Beispiel 1: Die Bürste hat einen Knickwinkel $\gamma$ = 14° und eine Auslenkung A bezogen auf die Länge L der Bürste von 10%. Die Knickspannung der Borsten beträgt rund 9,7 MPa. Alle Borsten sind aus demselben Material und haben dieselben geometrischen Abmessungen. Der E-Modul der Borsten beträgt 2000 MPa. Die Länge LB der Borsten beträgt 6 mm. Die Borsten sind im Querschnitt kreisförmig und haben einen Durchmesser von 0.15 mm. Diese Bürste eignet sich besonders für eine Längsachsenschwingung mit einer Frequenz von nicht mehr als 200 Hz. Die Bürste kann z.B. so ausgestaltet sein, wie in Figur 10 oder 11 gezeigt.

Beispiel 2: Die Bürste hat einen Knickwinkel $\gamma$ = 12° und eine Auslenkung A bezogen auf die Länge L der Bürste von 11%. Die Knickspannung der Borsten beträgt rund 4,5 MPa. Alle Borsten sind aus demselben Material und haben dieselben geometrischen Abmessungen. Der E-Modul der Borsten beträgt 4000 MPa. Die Länge LB der Borsten beträgt 10 mm. Die Borsten sind im Querschnitt kreisförmig und haben einen Durchmesser von 0.12 mm. Diese Bürste eignet sich besonders für eine Längsachsenschwingung mit einer Frequenz von 150 - 300 Hz.

Beispiel 3: Die Bürste hat einen Knickwinkel $\gamma$ = 10° und eine Auslenkung A bezogen auf die Länge L der Bürste von 7%. Die Knickspannung der Borsten beträgt rund 2,4 MPa. Alle Borsten sind aus demselben Material und haben dieselben geometrischen Abmessungen. Der E-Modul der Borsten beträgt 4500 MPa. Die Länge LB der Borsten beträgt 12 mm. Die Borsten sind im Querschnitt kreisförmig und haben einen Durchmesser von 0.10 mm. Diese Bürste eignet sich besonders für eine Längsachsenschwingung mit einer Frequenz von 150 - 300 Hz.

Beispiel 4: Die Bürste hat einen Knickwinkel γ = 8° und eine Auslenkung A bezogen auf die Länge LB der Bürste von 70%. Die Knickspannung der Borsten beträgt rund 1,5 MPa. Alle Borsten sind aus demselben Material und haben dieselben geometrischen Abmessungen. Der E-Modul der Borsten beträgt 3500 MPa. Die Länge LB der Borsten beträgt 12 mm. Die Borsten sind im Querschnitt kreisförmig und haben einen Durchmesser von 0.09 mm. Diese Bürste eignet sich besonders für eine Längsachsenschwingung mit einer Frequenz von bis zu 400 Hz.

Die Beispiele 2 bis 4 können z.B. so ausgestaltet sein, wie die in den Figuren 1 bis 3 gezeigte Bürste.

Beispiel 5: Die Bürste hat einen Knickwinkel γ = 10° und eine Auslenkung A bezogen auf die Länge L der Bürste von 10%. Die Knickspannung der Borsten beträgt rund 0,52 MPa. Alle Borsten sind aus demselben Material und haben dieselben geometrischen Abmessungen. Der E-Modul der Borsten beträgt 1500 MPa. Die Länge LB der Borsten beträgt 12 mm. Die Borsten sind im Querschnitt kreisförmig und haben einen Durchmesser von 0.08 mm. Diese Bürste eignet sich besonders für eine Längsachsenschwingung mit einer Frequenz von 150 - 300 Hz.

Beispiel 6: Die Bürste hat einen Knickwinkel γ = 11° und eine Auslenkung A bezogen auf die Länge L der Bürste von 8%. Die Knickspannung der Borsten beträgt rund 2,3 MPa. Alle Borsten sind aus demselben Material und haben dieselben geometrischen Abmessungen. Der E-Modul der Borsten beträgt 3000 MPa. Die Länge LB der Borsten beträgt 10 mm. Die Borsten sind im Querschnitt kreisförmig und haben einen Durchmesser von 0.10 mm. Diese Bürste eignet sich besonders für eine Längsachsenschwingung mit einer Frequenz von 150 - 300 Hz.

Beispiel 7: Die Bürste hat einen Knickwinkel γ = 9° und eine Auslenkung A bezogen auf die Länge L der Bürste von 7%. Die Bürste hat zwei unterschiedliche Arten von Borsten. In einem Randbereich, der für die Reinigung am Übergang zwischen Zahn und Zahnfleisch wesentlich ist, haben die Borsten eine Knickspannung gemäss Beispiel 2. In einem vom Randbereich umschlossenen Innenbereich beträgt der E-Modul 4000 MPa, die Länge der Borsten 9 mm. Die Borsten sind im Querschnitt kreisförmig und haben im ganzen Bereich einen Durchmesser von 0.12 mm. Die Knickspannung im Innenbereich beträgt 5,5 MPa. Diese Bürste eignet sich besonders für eine Längsachsenschwingung mit einer Frequenz von 150 - 300 Hz.

Beispiel 8: Die Bürste hat einen Knickwinkel γ = 16° und eine Auslenkung A bezogen auf die Länge L der Bürste von 17%. Die Bürste hat zwei unterschiedliche Arten von Borsten. Die überwiegende Zahl der Borsten, die für die Reinigung am Übergang zwischen Zahn und Zahnfleisch wesentlich ist, haben eine Knickspannung von 2.6 MPa. Der E-Modul der genannten Borsten beträgt 4500 MPa, die Länge LB der Borsten 7 mm. Die Borsten sind im Querschnitt kreisförmig und haben im ganzen Bereich einen Durchmesser von 0.06 mm. Diese Bürste eignet sich besonders für eine Längsachsenschwingung mit einer Frequenz von 150 - 300 Hz.

Die Beispiele 5 bis 8 können z.B. so ausgestaltet sein, wie in jeder der Figuren 1 bis 3 und 9 bis 11 gezeigten Bürste.

Die Borsten brauchen nicht kreisrund im Querschnitt zu sein. Sie können auch leicht oval oder unrund sein, z.B. indem die Querabmessung in der einen Richtung um 20% grösser ist als die Querabmessung in der dazu senkrechten Richtung.

Zusammenfassend ist festzustellen, dass erfindungsgemäss eine Bürste für einen Schallzahnbürstenantrieb geschaffen wird, welche zu einer besonders vorteilhaften Bewegung des Kopfteils für eine effektive und effiziente Reinigung der Zähne führt.

**Patentansprüche**

1. Bürste für eine Schallzahnbürste mit Längsachsenschwingung mit einem länglichen Grundkörper, der an einem Fussteil einen Adapter zum rotationsfesten Koppeln an einen Schallzahnbürstenantrieb bildet, um die Bürste um eine Fussteil-Längsachse zu schwingen, und der an einem Kopfteil einen Borstenträger bildet, in welchen eine Vielzahl von Borsten verankert ist, wobei zwischen Fussteil und Kopfteil ein Halsteil gebildet ist und wobei.

    a) der Grundkörper dahingehend einen Knick-Winkel bildet, dass die Fussteil-Längsachse und eine Kopfteil-Ausrichtungsachse einen Winkel γ im Bereich von 7° bis 17° einschliessen,
    b) der Borstenträger bezogen auf eine Länge (L) des Grundkörpers eine Auslenkung im Bereich von 5% - 20% hat,
    c) die Vielzahl von Borsten im Wesentlichen senkrecht zur Kopfteil-Ausrichtungsachse stehen,
    d) **dadurch gekennzeichnet, dass** der wesentliche Teil der Borsten eine Knickspannung $\sigma_k$ im Bereich von 0.1 bis 10 MPa haben, wobei

$$\sigma_k = \frac{\pi^3}{L^2} \cdot E \cdot r^2$$

    π = Kreiszahl (= 3.14)
    E = E-Modul der Borsten,
    r = halber Durchmesser der Borste
    L = Länge der Borste

2. Bürste nach Anspruch 1, **dadurch gekennzeichnet, dass** die Knickspannung höchstens 4 MPa, insbesondere höchstens 1 MPa beträgt.

3. Bürste nach Anspruch 1 oder 2, **dadurch gekennzeichnet, dass** die Knickspannung mindestens 1 MPa insbesondere mindestens 4 MPa beträgt.

4. Bürste nach einem der vorhergehenden Ansprüche, **dadurch gekennzeichnet, dass** die Knickspannung im Bereich von 1 MPa bis 4 MPa liegt.

5. Bürste nach einem der vorhergehenden Ansprüche, **dadurch gekennzeichnet, dass** der E-Modul der Borsten im Bereich von 1000 MPa bis 3500 MPa liegt.

6. Bürste nach einem der vorhergehenden Ansprüche, **dadurch gekennzeichnet, dass** der E-Modul der Borsten nicht mehr als 2000 MPa beträgt.

7. Bürste nach einem der Ansprüche 1 bis 5, **dadurch gekennzeichnet, dass** der E-Modul der Borsten im Bereich von 2500 MPa bis 3500 MPa liegt.

8. Bürste nach einem der vorhergehenden Ansprüche, **dadurch gekennzeichnet, dass** die mittlere Länge der Borsten im Bereich bis maximal 10 mm liegt.

9. Bürste nach einem der vorhergehenden Ansprüche, **dadurch gekennzeichnet, dass** die Auslenkung im Bereich von 5% bis 15% liegt, insbesondere im Bereich 7% bis 13%.

10. Bürste nach einem der vorhergehenden Ansprüche, **dadurch gekennzeichnet, dass** die Borsten einen Durchmesser von nicht mehr als 0.12 mm, insbesondere von maximal 0.1 mm, und besonders bevorzugt von 0.08 bis 0.12 haben.

11. Bürste nach einem der vorhergehenden Ansprüche, **dadurch gekennzeichnet, dass** der Winkel γ im Bereich von 12° bis 17° liegt.

12. Bürste nach einem der Ansprüche 1 bis 10, **dadurch gekennzeichnet, dass** der Winkel γ im Bereich von 7° bis 12° liegt.

13. Bürste nach einem der vorhergehenden Ansprüche, **dadurch gekennzeichnet, dass** die Borsten in Form von Büscheln angeordnet sind, die vorzugsweise voneinander distanziert sind.

14. Bürste nach einem der vorhergehenden Ansprüche, **dadurch gekennzeichnet, dass** mindestens zwei unterschiedliche Borstenlängen vorgesehen sind.

15. Bürste nach einem der vorhergehenden Ansprüche, **dadurch gekennzeichnet, dass** der Adapter zum rotationsfesten Koppeln an den Schallzahnbürstenantrieb einen parallel zu der Fussteil-Längsachse verlaufenden Kanal hat für eine formschlüssige Aufnahme eines Stift des Schallzahnbürstenantriebs.

16. Bürste nach einem der vorhergehenden Ansprüche, **dadurch gekennzeichnet, dass** der Grundkörper ein tragendes Material mit einem E-Modul von nicht mehr als 6000 MPa und nicht weniger als 2000 MPa aufweist.

17. Set enthaltend eine Bürste nach einem der vorhergehenden Ansprüche und einem Handapparat mit Schallbürstenantrieb, **dadurch gekennzeichnet, dass** die Bürste auf den Schallbürstenantrieb aufsteckbar ist und dass der Handapparat die Bürste um die Fussteillängsachse schwingend antreibt und der Schallbürstenantrieb eine Betriebsfrequenz im Bereich von 150 - 400 Hz, insbesondere im Bereich von 150 Hz bis 300 Hz hat.

18. Set nach Anspruch 17, **dadurch gekennzeichnet, dass** der der Motor eine Schwingung mit einer Winkelamplitude von max. 3° anregt.

19. Set nach Anspruch 18, **dadurch gekennzeichnet, dass** der Adapter des Fussteils einen Kanal hat und der Schallbürstenantrieb einen Stift hat, der in den Kanal formschlüssig einfügbar ist, um eine bezüglich der Fussteil-Längsachse verdrehsichere Verbindung zu schaffen, so dass die Bürste als Ganzes um die Fussteil-Längsachse schwingend angetrieben werden kann.

**Fig. 1**

**Fig. 2**

**Fig. 3**

Fig. 4

Fig. 7

Fig. 8

Fig. 5a

Fig. 5b

Fig. 6

**Fig. 9**

**Fig.10**

**Fig.11**

Europäisches
Patentamt

European
Patent Office

Office européen
des brevets

# EUROPÄISCHER RECHERCHENBERICHT

**Nummer der Anmeldung**

**EP 21 19 6658**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 352 703 A1 (CURADEN AG) 1. August 2018 (2018-08-01) * Abbildungen 2a,2b * ----- | 1-19 | INV. A46B9/04 |
| A,D | WO 2016/178142 A1 (BRAUN GMBH) 10. November 2016 (2016-11-10) * Seite 11, Absatz 2 – Seite 12, Absatz 1 * ----- | 1-19 | |

**RECHERCHIERTE SACHGEBIETE (IPC)**

**A46B**

Der vorliegende Recherchenbericht wurde für alle Patentansprüche erstellt

| Recherchenort | Abschlußdatum der Recherche | Prüfer |
|---|---|---|
| **Den Haag** | **18. Februar 2022** | **Raybould, Bruce** |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 19 6658

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2022

| Im Recherchenbericht angeführtes Patentdokument | Datum der Veröffentlichung | Mitglied(er) der Patentfamilie | Datum der Veröffentlichung |
|---|---|---|---|
| EP 3352703 A1 | 01-08-2018 | BR 112018003889 A2 | 25-09-2018 |
| | | CH 711557 A1 | 31-03-2017 |
| | | CH 711583 A1 | 31-03-2017 |
| | | EP 3352703 A1 | 01-08-2018 |
| | | JP 2018527158 A | 20-09-2018 |
| | | KR 20180054616 A | 24-05-2018 |
| | | WO 2017050612 A1 | 30-03-2017 |
| | | WO 2017157665 A1 | 21-09-2017 |
| WO 2016178142 A1 | 10-11-2016 | CN 107529875 A | 02-01-2018 |
| | | EP 3291700 A1 | 14-03-2018 |
| | | US 9402462 B1 | 02-08-2016 |
| | | WO 2016178142 A1 | 10-11-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102016011477, Schiffer
- EP 2454967 A1, Braun
- WO 2005046508 A1, Trisa
- JP H0443127 B, Kao
- US 2006168744 A1, Butler
- US 20120291212 A, Montagnino
- JP 2012161368 A, Sanion
- DE 29913406 U1, Rowenta

- US 6766548 B1, Rowenta
- WO 2013104020 A1, Erskine
- WO 2012151259 A1, Water Pik
- EP 2548531 B1, Trisa
- WO 2016178142 A1
- EP 1713413 B1, Church & Dwight
- WO 2017050612 A1, Curaden
- US 20120291212 A1